# EUROPEAN PATENT SPECIFICATION

(11) **EP 0 706 620 B1**
(45) Date of publication and mention of the grant of the patent: **26.03.1997**
(21) Application number: 94920420.0
(22) Date of filing: 08.07.1994
(51) Int. Cl.: F16F 15/26, B63H 21/30

(54) **A DUAL VIBRATION-COMPENSATING APPARATUS**
VORRICHTUNG ZUR KOMPENSATION DOPPELTER SCHWINGUNGEN
APPAREIL DE COMPENSATION DE VIBRATIONS DE DEUX ORDRES DIFFERENTS

(30) Priority: 09.07.1993 DK 834/93
(43) Date of publication of application: 17.04.1996
(73) Proprietor: F.L. Smidth & Co. A/S, DK-2500 Valby, Copenhagen (DK)
(72) Inventor: MADSEN, John, Gram, DK-2200 Copenhagen N (DK)
(74) Representative: Jensen, Peter Kim
(86) International application number: DK9400282
(87) International publication number: WO9502132

(56) References cited:
- DE-C- 292 711
- US-A- 4 041 802
- US-A- 4 936 268

## Description

### Technical Field

The invention relates to a dual vibration-compensating apparatus for counteracting unbalanced moments of two different orders generated by the main engine and comprising a first compensating unit comprising a first pivotally arranged shaft part on which a first rotary body with an eccentric mass is mounted, and a second pivotally arranged shaft part on which a second rotary body with the same eccentric mass as the first rotary body is mounted, said first rotary body comprising a first rotary body part being fixedly mounted on the first shaft part and a second rotary body part being releasably mounted on the first shaft part, said second rotary body comprising a third rotary body part being fixedly mounted on the second shaft part and a fourth rotary body part being releasably mounted on the second shaft part, said first and second shaft part being interconnected through a transmission so as to rotate in opposite directions and driven at a rpm being a multiple of the rpm of the engine of the vessel by means of a driving motor and a control and synchronising device.

### Background Art

It is known to compensate the unbalanced moments of the first, second and/or higher order from marine engines by means of a vibration-compensating apparatus such as the type disclosed in Danish patent application No. 6978/88. It is furthermore known that such vibration-compensating apparatus also may be used to compensate for other unbalanced forces or moments, for instance from the propellers.

Furthermore, EP-B1-0.010.973 discloses a compensating apparatus intended to compensate for vertical unbalanced moments of the first and second order. Each of the compensating units of said compensating apparatus comprises a single rotary body generating a non-variable rotating force component.

### Disclosure of the Invention

The object of the present invention is to provide a universally applicable vibration-compensating apparatus for counteracting unbalanced moments of two different orders, said apparatus being of a very simple structure.

The dual vibration-compensating apparatus according to the invention is characterised in that the apparatus further comprises a second compensating unit comprising a third pivotally arranged shaft on which a third rotary body with an eccentric mass is mounted, said third rotary body comprising a fifth rotary body part being fixedly mounted on the third shaft and a sixth rotary body part being releasably mounted on the third shaft and that the third shaft of the second compensating unit is arranged essentially perpendicular to the first and the second shaft part of the first compensating unit and interconnected therewith by means of a transmission.

Consequently, a dual vibration-compensating apparatus is provided which can compensate for unbalanced moments or forces being perpendicular to one another and whereby the size of the resulting force generated by the rotary bodies may be varied for both compensating units. Further, the direction of the force generated by the first compensating unit having two opposite rotating masses can be regulated by changing the mutual position of the two rotating masses. A universally applicable vibration-compensating apparatus is thereby obtained by means of which it is possible to compensate for the main engine's unbalanced moments of the first and second order by arranging the compensating in the rear end of the vessel.

According to the invention, the second compensating unit further may comprise a fourth pivotally arranged shaft on which a fourth rotary body with the same eccentric mass as the third rotary body is mounted, said fourth rotary body comprising a seventh rotary body part being fixedly mounted on the fourth shaft and an eighth rotary body part being releasably mounted on the fourth shaft, said third and said fourth shaft being co-axially arranged and interconnected so as to rotate in opposite directions. This embodiment has the advantage that it is possible to change both the size and the direction of the resulting force generated by both compensating units.

Further, according to the invention, the transmission between the two vibration-compensating units may comprise at least one coupling being releasable to enable turning of the third shaft of the second compensating unit relative to the first or the second shaft part of the first compensating unit. As a result, it is possible to change the phase angle between the two compensating units relatively fast by releasing the coupling, turning the third shaft of the second compensating unit relative to the first and the second shaft part of the first compensating unit and engaging the coupling in the new relative position.

Finally, according to the invention, the transmission between the first and the second shaft part of the first compensating unit may comprise a releasable coupling being releasable to enable turning of the first and the second shaft part relative to each other. Consequently, the direction of the first compensating unit may be changed relatively fast by releasing said coupling, turning the first and the second shaft part in relation to each other and engaging the coupling in the new relative position of the two shaft parts.

Advantageous embodiments of the invention appear from the sub-claims and the detailed description.

### Brief Description of the Drawings

The invention is described in greater detail below with reference to the accompanying drawings, in which
Fig. 1 is a diagrammatic, top view of a vibration-compensating apparatus,
Fig. 2 is a sectional view along the line A-A in Fig. 1, and
Fig. 3 is diagrammatic, vertical sectional view through a vibration-compensating apparatus according to the invention.

### Best Mode for Carrying out the Invention

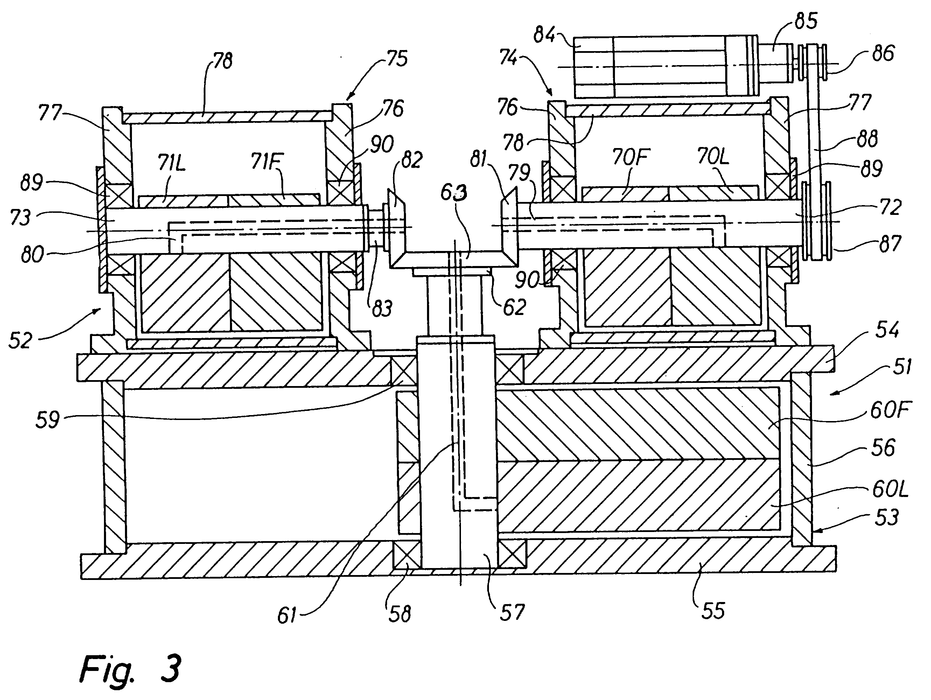

Fig. 3 illustrates an embodiment of the dual vibration-compensating apparatus according to the invention comprising a first compensating unit 52 and a second compensating unit 51 arranged so as to rotate about axes perpendicular to each other and thereby to provide oscillating forces in mutually perpendicular planes, including mutually perpendicular forces. The second compensating unit 51 comprises a housing 53 having two end walls 54,55 and a circumferential wall 56 fixed between the two end walls 54 and 55 by means of staybolts (not-shown). The compensating unit 51 is intended to be mounted in the position shown and is therefore provided with mounting holes (not-shown) in the lower end wall.

A shaft 57 is pivotally supported by means of bearings 58,59 in the upper and lower end wall 54 and 55, respectively.

A rotary body 60 is mounted on the shaft 57, said body being essentially shaped like the sector of a circle when seen in axial direction and thus having an eccentric centre of gravity. The rotary body 60 comprises a fixed rotary body part 60F and a releasably mounted rotary body part 60L being releasable for turning relative to the fixed rotary body part 60F. The two rotary body parts 60F and 60L is preferably of equal size, whereby the rotating unbalanced force generated by the rotary body may be varied between zero and twice the unbalanced force of each of the rotary body parts. To enable turning of the releasable rotary body 60, the shaft is provided with a passage 61, through which pressurised fluid may be supplied to the mounting area between the shaft 57 and the releasable rotary body part 60L. The shaft 57 is provided with an upper end projecting out of the housing, onto which a bevel gear 63 is mounted via a coupling 62 releasable for turning, for instance a conical friction coupling.

The first compensating unit 52 comprises two rotary bodies 70,71 being shaped essentially like the sector of a circle when seen in axial direction and therefore having an eccentric centre of gravity. Each of the rotary bodies 70, 71 is pivotally supported in a housing 74,75 comprising two end walls 76,77 and a circumferential wall 78 being fixed between the end walls by means of staybolts (not shown). Each rotary body 70,71 comprises a rotary body part 70F, 71F being fixedly mounted on the shaft and a releasable rotary body part 70L, 71L being arranged releasable for turning. The releasable rotary body may be released by supplying pressurised fluid to the mounting area thereof on the shaft through a passage 79,80. The shafts 72,73 are each provided with a drive pinion 81,82 at the free end facing one another, said drive pinion engaging the bevel gear 63 on the shaft 57 of the second compensating unit 51. The drive pinion 82 is arranged on the free end of the shaft by means of a coupling 83 being releasable for turning, for instance a conical friction coupling. The engagement between the bevel gear 63 and the drive pinions 81,82 causes the shafts 72, 73 and thereby the rotary bodies 70,71 to rotate in opposite directions at the same rpm, which in the example shown is twice the rpm of the vertical shaft 57. As it is possible to turn the releasable rotary body parts 70L, 71L relative to the fixed rotary body parts 70F, 71F, the resulting oscillating force may be varied continuously from zero to four times the force of each rotary body part, when the eccentric mass for said parts is the same. The releasable coupling 83 makes it possible to regulate the direction of the oscillating resulting force of the first compensating unit relatively fast, while the releasable coupling 62 makes it possible to regulate the phase angle relatively fast between the two compensating units 51,52 relative to one another.

A driving motor 84, preferably a servomotor, is arranged on the housing 74 driving the shaft 72 via a planet gear 85 and a transmission. The transmission comprises a pulley 86 mounted on an output shaft of the planet gear and a second pulley 87 mounted on a projecting shaft end of the shaft 72 and a belt 88 between the two pulleys 86,87.

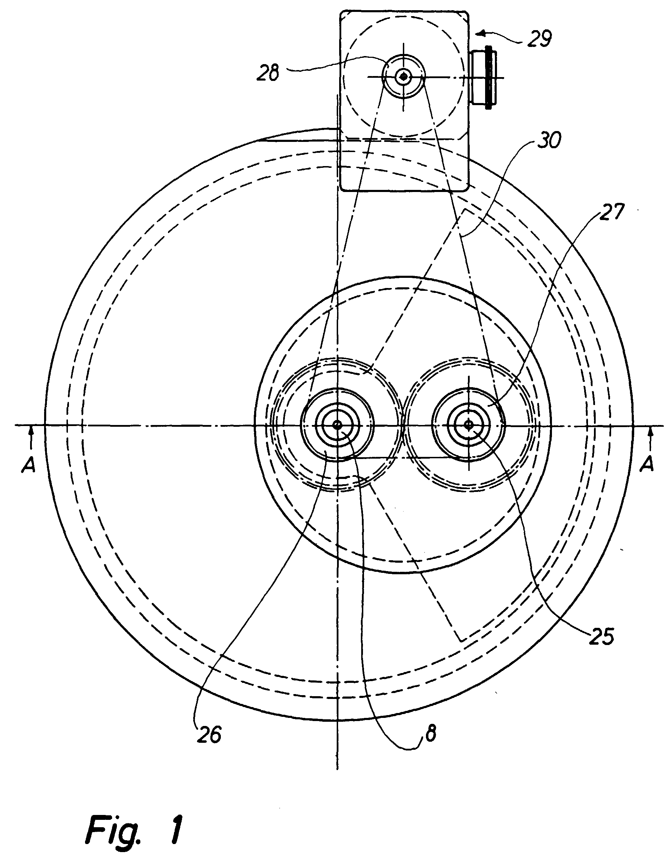

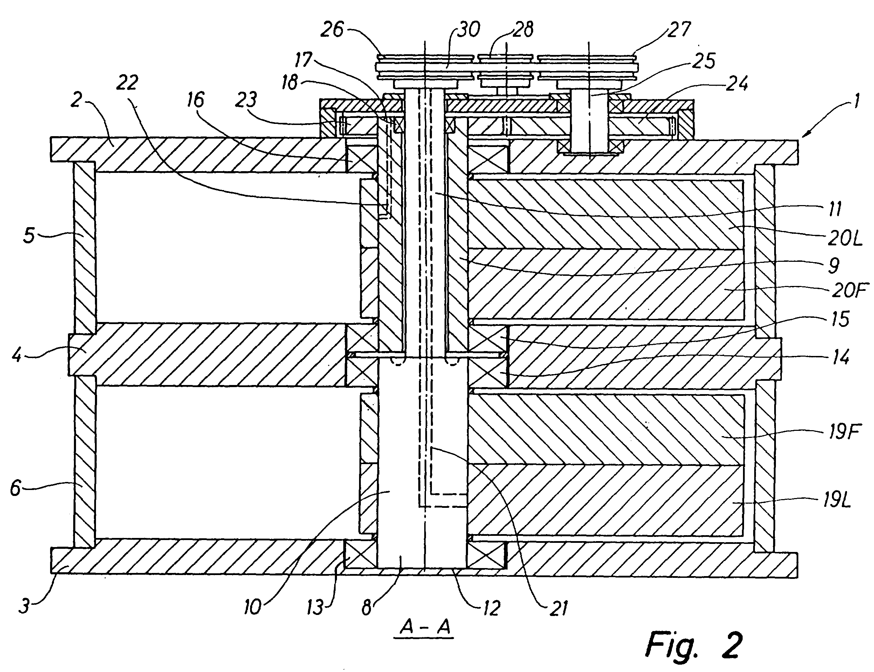

Figs. 1 and 2 show a vibration-compensating apparatus, which per se is not an embodiment of dual vibration-compensating apparatus according to the invention, but serves as an illustration of an alternative structure of the individual compensating units of the dual vibration-compensating apparatus according to the invention. The apparatus shown comprises a housing 1 having a first end wall 2, a second end wall 3 and a partition wall 4. Between the first end wall 2 and the partition wall 4 a first circumferential wall 5 is arranged. In a corresponding manner a second circumferential wall 6 is arranged between the partition wall 4 and the end wall 3. The housing 1 is assembled by staybolts (not shown) extending in between the two end walls 2,3. The second end wall 3 forms the base of the housing and is provided with mounting holes (not shown).

A dual shaft comprising an inner central shaft 8 and a hollow shaft 9 arranged pivotally thereon is supported by the end walls 2 and 3 and the partition wall 4 by means of bearings. The central shaft comprises a first shaft portion 10 of a larger diameter and a second shaft portion 11 of a smaller diameter. The hollow shaft 9 is arranged on the small shaft portion 11 of the central shaft 8 and has the same outer diameter as the first shaft portion 10 of the central shaft 8.

At its outer end 12, the large shaft portion 10 of the central shaft 8 is pivotally arranged relative to the other end wall 3 by means of a bearing 13. In the transition area to the second small shaft portion 11, the first shaft portion of the central shaft 8 is pivotally arranged in the partition wall 4 by means of a bearing 14. In a manner corresponding thereto, the hollow shaft 9 is at its lower end pivotally arranged relative to the partition wall 4 by means of a bearing 15, and at its upper end pivotally arranged relative to the upper end wall 2 by means of a bearing 16. Finally, the hollow shaft is pivotally arranged by means of a bearing 18 on the small shaft portion 11 of the central shaft.

In the large shaft portion 10 of the central shaft 8 a rotary body 19 is arranged and being essentially shaped like the sector of a circle when seen in axial direction and thus having an eccentric centre of gravity. The rotary body 19 comprises a rotary body part 19F being fixedly mounted on the large shaft portion 10 of the shaft 8 and a releasably mounted rotary body part 19L being releasable for turning relative to the fixed rotary body part 19F. In a corresponding manner, a rotary body 20 is mounted on the hollow shaft, said body also being shaped like sector of a circle when seen in an axial direction and comprising a rotary body part 20F being fixedly mounted on the shaft and a releasably arranged rotary body part 20L.

The releasably arranged rotary body parts 19L, 20L may be released and turned by supplying pressurised fluid to the mounting area between the shaft and the rotary body part, for instance as disclosed in Danish patent application No. 6978/88.

The two shafts 8, 9 are interconnected through a transmission so as to rotate in opposite directions. The transmission comprises a first gear wheel 23 fixed to the hollow shaft 9 at the upper end 17 thereof, and an engaging second gear wheel 24 mounted on a shaft 25, which in turn is pivotally arranged coaxially with the dual shaft 8,9.

On the outer end of the small shaft portion 11 of the central shaft 8, a pulley 26 is mounted. A corresponding pulley 27 is mounted on the outer end of the second shaft 25. A third pulley 28 is mounted on the output shaft of a driving motor 29, preferably a servomotor, driving the two pulleys 26,27 in the same direction via a belt 30, whereby the central shaft 8 and the hollow shaft 9 and consequently also the rotary bodies 19,20 connected thereto rotate in opposite directions. As the rotary bodies have the same eccentric mass, a resulting force component of zero is generated in one direction and in a direction perpendicular thereto a harmonic force component is generated which varies between zero and twice the force of each rotary body. As the releasable rotary body part 19L,20L of the rotary bodies may be turned relative to the fixed rotary body part 19F, 20F, the force generated by each rotary body may be regulated and the resulting force component may thereby be adjusted continuously from zero to four time the force of each rotary body part, when said parts have an equal eccentric mass.

As indicated above, the dual vibration-compensating apparatus may be modified in many ways without thereby deviating from the scope of the invention as claimed. Thus, instead of the rotary bodies being arranged on each side of the shaft 57 of the second compensating unit, the first compensating unit 52 may be formed of a compensating unit provided with rotary bodies arranged on the same side thereof, for instance a compensating unit as the one described above or the unit disclosed in Danish patent application No. 6978/88. As a result, the two compensating units may be interconnected by means of a bevel gearing. Further, the lower compensating unit may be formed of a compensating unit with two opposite rotating rotary bodies, such as the one described above or the compensating unit according to Danish patent application No. 6978/88.

## Claims

1. A dual vibration-compensating apparatus for counteracting unbalanced moments of two different orders generated by a main engine of a vessel and comprising a first compensating unit (52) comprising a first pivotally arranged shaft part (72) on which a first rotary body (70) with an eccentric mass is mounted, and a second pivotally arranged shaft part (73) on which a second rotary body (71) with the same eccentric mass as the first rotary body (70) is mounted, said first rotary body (70) comprising a first rotary body part (70F) being fixedly mounted on the first shaft part (72) and a second rotary body part (70L) being releasably mounted on the first shaft part (72), said second rotary body (71) comprising a third rotary body part (71F) being fixedly mounted on the second shaft part (73) and a fourth rotary body part (71L) being releasably mounted on the second shaft part (73), said first and second shaft part (72,73) being interconnected through a transmission (63,81,82) so as to rotate in opposite directions and driven at a rpm being a multiple of the rpm of the engine of the vessel by means of a driving motor (84) and a control and synchronising device, **characterised** in that the apparatus further comprises a second compensating unit (51) comprising a third pivotally arranged shaft (57) on which a third rotary body (60) with an eccentric mass is mounted, said third rotary body (60) comprising a fifth rotary body part (60F) being fixedly mounted on the third shaft (57) and a sixth rotary body part (60L) being releasably mounted on the third shaft (57) and that the third shaft (57) of the second compensating unit (51) is arranged essentially perpendicular to the first and the second shaft part (72,73) of the first compensating unit (52) and interconnected therewith by means of a transmission (63,81,82).

2. A dual vibration-compensating apparatus as claimed in claim 1, **characterised** in that the second compensating unit (51) further comprises a fourth pivotally arranged shaft on which a fourth rotary body with the same eccentric mass as the third rotary body (60) is mounted, said fourth rotary body comprising a seventh rotary body part being fixedly mounted on the fourth shaft and an eighth rotary body part being releasably mounted on the fourth shaft, said third (57) and said fourth shaft being co-axially arranged and interconnected so as to rotate in opposite directions.

3. A dual vibration-compensating apparatus as claimed in claim 1 or 2, **characterised** in that the transmission between the two vibration-compensating units (52;51) comprises at least one coupling (62:83) being releasable to enable turning of the third shaft (57) of the second compensating units (51) relative to the first or second shaft part (72,73) of the first compensating units (52).

4. A dual vibration-compensating apparatus as claimed in one or more of the preceding claims 1-3, **characterised** in that the transmission (81,82, 63) between the first and the second shaft part (72,73) of the first compensating unit (52) comprises a releasable coupling (83) being releasable to enable turning of the first and second shaft part relative to each other.

## Patentansprüche

1. Eine Vorrichtung zur Kompensation doppelter Schwingungen zum Ausgleich von der Hauptmaschine eines Schiffes erzeugter unausgeglichener Momente zweier verschiedener Ordnungen, die eine erste Kompensationseinheit (52) mit einem ersten drehbar angeordneten Wellenteil (72), auf dem ein erster Drehkörper (70) mit einer exzentrischen Masse angebracht ist, und einem zweiten drehbar angeordneten Wellenteil (73) umfaßt, auf dem ein zweiter Drehkörper (71) mit derselben exzentrischen Masse wie der erste Drehkörper (70) angebracht ist, wobei der erste Drehkörper (70) ein erstes Drehkörperteil (70F), das auf dem ersten Wellenteil (72) fest angebracht ist, und ein zweites Drehkörperteil (70L) umfaßt, das auf dem ersten Wellenteil (72) lösbar angebracht ist, ferner der zweite Drehkörper (71) ein drittes Drehkörperteil (71F), das auf dem zweiten Wellenteil (73) fest angebracht ist, und ein viertes Drehkörperteil (71L) umfaßt, das auf dem zweiten Wellenteil (73) lösbar angebracht ist, wobei das erste und zweite Wellenteil (72,73) über eine Übersetzung (63,81,82) miteinander verbunden sind, um sich in entgegengesetzten Richtungen zu drehen, und mittels eines Antriebsmotors (84) und einer Steuer- und Synchronisiereinrichtung mit einer Drehzahl angetrieben werden, die ein Mehrfaches der Drehzahl der Maschine des Schiffes beträgt, dadurch gekennzeichnet, daß die Vorrichtung außerdem eine zweite Kompensationseinheit (51) mit einer dritten drehbar angeordneten Welle (57) umfaßt, auf der ein dritter Drehkörper (60) mit einer exzentrischen Masse angebracht ist, wobei der dritte Drehkörper (60) ein fünftes Drehkörperteil (60F), das auf der dritten Welle (57) fest angebracht ist, und ein sechstes Drehkörperteil (60L) umfaßt, das auf der dritten Welle (57) lösbar angebracht ist, und daß die dritte Welle (57) der zweiten Kompensationseinheit (51) im wesentlichen senkrecht zu dem ersten und dem zweiten Wellenteil (72,73) der ersten Kompensationseinheit (52) angeordnet und damit mittels einer Übersetzung (63,81,82) verbunden ist.

2. Eine Vorrichtung zur Kompensation doppelter Schwingungen wie in Anspruch beansprucht, dadurch gekennzeichnet, daß die zweite Kompensationseinheit (51) außerdem eine vierte drehbar angeordnete Welle umfaßt, auf der ein vierter Drehkörper mit derselben exzentrischen Masse wie der dritte Drehkörper (60) angebracht ist, wobei der vierte Drehkörper ein siebtes Drehkörperteil, das auf der vierten Welle fest angebracht ist, und ein achtes Drehkörperteil umfaßt, das auf der vierten Welle lösbar angebracht ist, wobei die dritte (57) und vierte Welle koaxial angeordnet und miteinander verbunden sind, um sich in entgegengesetzten Richtungen zu drehen.

3. Eine Vorrichtung zur Kompensation doppelter Schwingungen wie in Anspruch 1 oder 2 beansprucht, dadurch gekennzeichnet, daß die Übersetzung zwischen den zwei Schwingungskompensationseinheiten (52; 51) wenigstens eine lösbare Kupplung (62; 83) umfaßt, um ein Drehen der dritten Welle (57) der zweiten Kompensationseinheiten (51) relativ zu dem ersten oder zweiten Wellenteil (72, 73) der ersten Kompensationseinheiten (52) zu ermöglichen.

4. Eine Vorrichtung zur Kompensation doppelter Schwingungen wie in einem oder mehreren der vorangehenden Ansprüche 1 bis 3 beansprucht, dadurch gekennzeichnet, daß die Übersetzung (81, 82, 63) zwischen dem ersten und dem zweiten Wellenteil (72, 73) der ersten Kompensationseinheit (52) eine lösbare Kupplung (83) umfaßt, die zum Drehen des ersten und zweiten Wellenteils relativ zueinander lösbar ist.

## Revendications

1. Appareil de compensation de vibration dual pour agir à l'encontre de moments non-compensés de deux ordres différents engendrés par un moteur principal d'un bateau et comprenant une première unité de compensation (52) comprenant une première partie d'arbre (72) agencée de manière pivotante sur laquelle est monté un premier corps rotatif (70) avec une masse d'excentrique, et une seconde partie d'arbre (73) agencée de manière pivotante sur laquelle est monté un second corps rotatif (71) avec la même masse d'excentrique que le premier corps rotatif (70), ledit premier corps rotatif (70) comprenant une première partie de corps rotatif (70F) montée de manière fixe sur la première partie d'arbre (72) et une seconde partie de corps rotatif (70L) montée de manière libérable sur la première partie d'arbre (72), ledit second corps rotatif (71) comprenant une troisième partie de corps rotatif (71F) montée de manière fixe sur la seconde partie d'arbre (73) et une quatrième partie de corps rotatif (71L) étant monté de manière libérable sur la seconde partie d'arbre (73), lesdites première et seconde parties d'arbre (72, 73) étant interconnectées à travers une transmission (63, 81, 82) de manière à tourner dans des sens opposés et entraînées à une vitesse de rotation multiple de la vitesse de rotation du moteur du bateau au moyen d'un moteur d'entraînement (84) et un dispositif de synchronisation et de commande, caractérisé en ce que l'appareil comprend en outre une seconde unité de compensation (51) comprenant un troisième arbre agencé de manière pivotante (57) sur lequel est monté un troisième corps rotatif (60) avec une masse d'excentrique, ledit troisième corps rotatif (60) comprenant une cinquième partie de corps rotatif (60F) montée de manière fixe sur le troisième arbre (57) et une sixième partie de corps rotatif (60L) montée de manière libérable sur le troisième arbre (57) et en ce que le troisième arbre (57) de la seconde unité de compensation (51) est agencé essentiellement perpendiculairement à la première et la seconde parties d'arbre (72, 73) de la première unité de compensation (52) et interconnecté avec celles-ci au moyen d'une transmission (63, 81, 82).

2. Appareil de compensation de vibration dual selon la revendication 1, caractérisé en ce que la seconde unité de compensation (51) comprend en outre un quatrième arbre agencé de manière pivotante sur lequel est monté un quatrième corps rotatif avec la même masse d'excentrique que le troisième corps rotatif (60), ledit quatrième corps rotatif comprenant une septième partie de corps rotatif montée de manière fixe sur le quatrième arbre et une huitième partie de corps rotatif montée de manière libérable sur le quatrième arbre, ledit troisième (57) et ledit quatrième arbres étant agencés de manière coaxiale et interconnectés afin de tourner dans des sens opposés.

3. Appareil de compensation de vibration dual selon la revendication 1 ou 2, caractérisé en ce que la transmission entre les deux unités de compensation de vibration (52 ; 51) comprend au moins un couplage (62 ; 83) libérable pour permettre la rotation du troisième arbre (57) de la seconde unité de compensation (51) par rapport à la première ou seconde partie d'arbre (72, 73) de la première unité de compensation (52).

4. Appareil de compensation de vibration dual selon l'une quelconque des revendications précédentes 1 à 3, caractérisé en ce que la transmission (81, 82, 63) entre la première et la seconde parties d'arbre (72, 73) de la première unité de compensation (52) comprend un couplage libérable (83), libérable pour permettre la rotation de la première et seconde parties d'arbre l'une par rapport à l'autre.
